# EUROPEAN PATENT SPECIFICATION

(11) **EP 1 832 047 B1**
(45) Date of publication and mention of the grant of the patent: **09.03.2011**
(21) Application number: 04809211.8
(22) Date of filing: 29.12.2004
(51) Int. Cl.: H04L 12/28, H04W 84/18

(54) **NAME SERVICE IN A MULTIHOP WIRELESS AD HOC NETWORK**
NAMENDIENST IN EINEM DRAHTLOSEN MEHRSPRUNG-AD-HOC-NETZWERK
SERVICE DE NOMMAGE DANS UN RESEAU AD HOC SANS FIL A PLUSIEURS BONDS

(43) Date of publication of application: 12.09.2007
(73) Proprietor: Telefonaktiebolaget LM Ericsson (publ), 164 83 Stockholm (SE)
(72) Inventor: RIOMAR, Henrik, S-448 47 Floda (SE); AXELSSON, Leif, S-436 51 Hovås (SE)
(74) Representative: Vejgaard, Christian
(86) International application number: PCT/SE2004/002038
(87) International publication number: WO 2006/071151

(56) References cited:
- WO-A2-2004/107680
- US-A1- 2003 187 570
- US-A1- 2004 146 007
- US-A1- 2004 240 457

## Description

### Field of the invention

The present invention relates in general to a name service in a wireless ad hoc network and particularly to a distributed auto discovering name service for multihop wireless ad hoc networks.

### Background of the invention

It is an increasing interest for developing and deploying wireless multihop ad hoc networks in several different application areas within commercial, private installations, and for governmental purposes. The commercial applications of ad hoc networks can for instance be used for hot spot installations during special events. Hot spots are local areas where wireless access are provided for paying customers so they can be in contact with a network, such as the Internet or a private network. Private installations can be within a company or during a special event.

The governmental applications can be during rescue operations within disaster areas, military applications, or during special events.

A multihop wireless ad hoc network is built up by the nodes present since the network actually is formed by the present nodes; an ad hoc network does not have any central control function. The nodes all act as routers, routing traffic to other nodes which is a similar concept as for fixed networks. However, the routing protocol used in these types of multihop wireless ad hoc networks is often quite different from the normal routing protocols used for fixed networks. The nodes keep track of the other nodes by updating a routing table using the protocol and there are mainly two different categories of routing protocols: reactive and proactive. The reactive protocol reacts on the need of routing a message in the network and updates the routing table paths on demand. The proactive protocol updates the routing table on a regular basis.

The term multihop is defined as using the nodes together building up the network forwards messages and traffic not intended for themselves to other nodes able to communicate with the node until the data traffic reaches the intended node.

The existing solutions for multihop wireless network has knowledge about which nodes are available and possible routing routes to the nodes part of the network; however, there is a lack of knowledge about the users in the multihop wireless network. The network infrastructure routing tables do not handle any naming services.

Central domain name system (DNS) has a drawback in the fact that it is central, this means that it is vulnerable as a single point of failure. During update of such a central database, it may become unavailable for a certain period of time, thus making traffic within the network impossible or at least difficult.

US 2004/146007 **describes** a method for selecting and routing data in an ad-hoc mobile wireless network having a plurality of nodes including multiple sources and destinations. The method includes sending a forward control packet from a source to the destination via at least one intermediate node at intervals of time, where the intermediate node is randomly selected. Each of the intermediate nodes store weights of the neighbor nodes. When the forward control packets reach the destination node, they are evaluated in accordance with one or more given parameters and sent back as backward control packets storing the evaluation results. As each of the intermediate nodes receive the backward control packets, the weights of the corresponding neighbor nodes are modified based on the stored evaluation results. Similarly, the backward control packets are received at the source nodes and the weights of the corresponding neighbor nodes are modified based on the stored evaluation results. Finally, a group of routing routes to the destination is selected based on the modified weights of the neighbor nodes and data packets are sent from the source to the destination via the intermediate nodes upon selection of the group.

### Summary of the Invention

Accordingly the present invention according to a preferred embodiment preferably seeks to mitigate, alleviate or eliminate one or more of the above-mentioned disadvantages singly or in any combination.

This is done by a method for automatic name service discovery, which is distributed to all nodes present in a network. A name service database is updated locally in each node present in the network.

A first embodiment of the present invention, a method information with network information in a multishop wire comprising a plurality of modes is presented, as defined claim 1.

In the method, the user information may comprise information about at least one of user identifications, network addresses, available services within network, and authority level of each user.

Another aspect of the present invention, a rode in a multihop wireless ad hoc network comprising a plurality of nodes is presented as defined in claim 3.

The service in the node may further update the information changes in the database.

In yet another aspect of the present invention, a multihop wireless ad hoc network comprising a plurality of nodes, together forming the network, wherein changes of user information of the nodes are automatically distributed to all nodes within the network and wherein the user information is a naming service for associating user information with a respective network address, as defined in claim 5.

The user information may further comprise information about available services in nodes. The user information may further comprise information about authority level of each user.

The at least one node within the network may be connected to a second network and wherein the at least one node acts as a gateway between the network and the second network; adapting user information in the network to usable information in the second network.

In still another aspect of the present invention, an instruction set in a node in a multihop wireless ad hoc network comprising a plurality of nodes is presented, for responding to changes of user information reaching the node, the instruction set comprising:
an instruction set for detecting changes in a database, stored in each node, comprising association information between user information and network addresses;
an instruction set for updating the database with changes of user information; the changes can be received from the node or other nodes; and an instruction set for distributing changes in the database to nodes within radio range.

Yet another aspect of the present invention is presented: a database in a node in a multihop wireless ad hoc network, comprising entries for associating user information with network information; changes of the database being updated and distributed to all nodes within the network when changes in the database has been detected.

In the database the entries may comprise at least one of user identification of each user connected within the network and corresponding network address, available services in each node, and authority level of each user.

Yet another aspect of the present invention is presented: an application in a node in a multihop wireless ad hoc network using a database for finding a network address of a user within the network when communicating with a certain user; the database comprising entries for associating user information with network information; changes of the database being updated and distributed to all nodes within the network when changes in the database has been detected.

Yet another aspect of the present invention comprise a database associating user information with network information for use when a mobile station in a packet based network system connects to a private network using a virtual private network function (VPN), wherein a VPN server contains one instance of the database for each connected user, and the instances of the database are automatically updated when changes of user information occur.

Another aspect of the present invention comprise a database in a mobile station associating user information with network information for use when a mobile station in a packet based network system connects to a private network using a virtual private network function (VPN), wherein each mobile station contains one instance of the database, and each instance of the database are automatically updated when changes of user information occur.

These and other aspects of the invention will be apparent from and elucidated with reference to the embodiments described hereinafter.

### Brief description of the drawings

In the following the invention will be described in a non-limiting way and in more detail with reference to exemplary embodiments illustrated in the enclosed drawings, in which:
- Fig. 1: illustrates a network according to the present invention;
- Fig. 2: is a schematic of a node in the network found in Fig. 1;
- Fig. 3: is a schematic of a method according to the present invention; and
- Fig. 4: is a schematic of another embodiment of the present invention.

### Detailed description of the invention

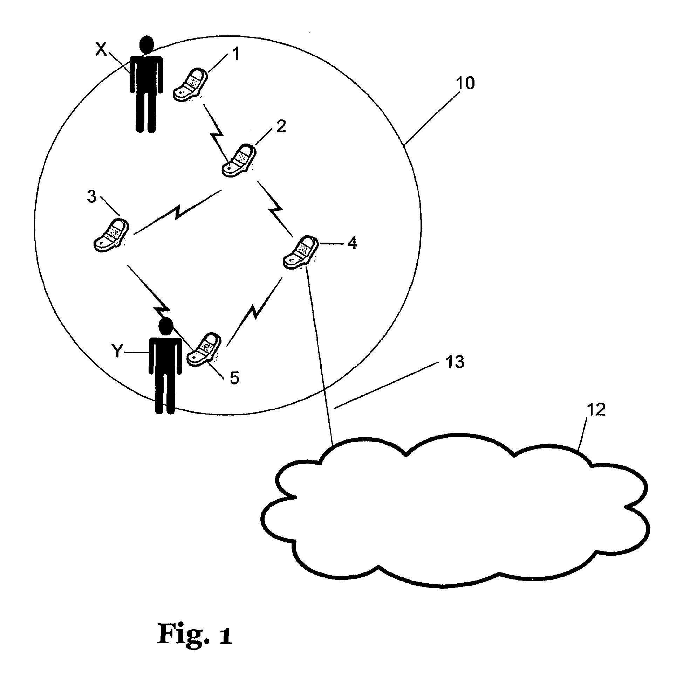

Fig 1 illustrates a multihop wireless ad hoc network or cell 10 according to the present invention comprising, for example sake, a number of nodes 1, 2, 3, 4, 5 part of the network 10. The number of nodes that can be part of the network is not limited. The ad hoc network can in turn be connected to another network 12, fixed or wireless, for example the Internet, through one or several nodes acting as gateways. There is some type of routing protocol available for keeping a routing table with knowledge about the different nodes available and there network address information, as well as paths to gateways within the network.

In this example, node 1 with a user named X has the desire to communicate with a user named Y. In order to do this X needs to translate the user name, Y, to a network address. Thereafter, the routing protocol will be able to find user Y in the network. Finally communication is established between X and Y. The present invention uses a method for updating a database comprising information about available users and their network location (which is not the same as physical location of course); associating user information with network information. Each node continuously tracks traffic on the network in order to respond to changes in the network configuration. Each node may be looking in a neighbor cache available in each node, looking for neighbor topology changes. Such neighbor cache functions may be for example an ARP (Address Resolution Protocol) function in IPv4 or a Neighbor Discovery function in IPv6. These protocols keep track of network hardware addresses for neighboring nodes.

Upon activation of the network, if a node discovers traffic on the network, it will exchange information to the nearest neighbors, the information may comprise, but not limited to, user information, address information, services available from the node, or authority level. The different types of information will be discussed later in more detail. The nearest neighbors obtain this information and store it in their local database located in each node. They will also pass the information on to their nearest neighbors and so on until equilibrium is reached and all nodes in the network have updated their database. Thus all nodes may have the same data about the network.

When the network has formed, the nodes will still keep track of traffic and look for new users or new information available. If so, a new update stream will be sent to the nearest neighbors again and the network will be updated in the same manner as described above for the network activation situation.

When a first node sees a new node it will ask the new node for information. There are two possible responses to this request:
1. If the new node is using the method according to the present invention, the two nodes will exchange information.
2. If the new node is not using the method according to the present invention, no answer will come back to the first node, and the first node goes back to a tracking mode: looking for new traffic in the network.

A node may be triggered to send out new information to the network by using an internal trigger such as updating their own database with new information about themselves, thus the system will be triggered and start a network update transmission.

Optionally it is possible to configure the system to flood the network with information in order to trigger a new update from the nearest neighbors or to update the entire network. This ensures that the network has fresh and correct information about users and available services. The flooding behavior may be triggered if there has been a long time period without any information exchange in the network or for the node, or it may be triggered on a regularly basis.

When applications (or users) desire to communicate with a certain user, the node in question looks into the name service database and connects the user to a network address, enabling traffic to be routed within the network to the desired user.

A more detailed description about different types of information that could be exchanged using the present invention will now follow. The two most important information types are user name and network address. These provide the possibility to find a route to a specific user. If a user logs out from a node and logs into another node the network updates the database entries accordingly and it will still be possible to route traffic to the correct user. The user information may comprise at least one of name, user name, identification data, email address, IP address in "Home" network, or other information relating to the user, such as home address, telephone number or similar data. With "Home" network means a network where the user belongs to such as, for instance, a private network or company network. This may be a network where the user often resides in with user equipment but it may also be a network provided by a Service Provider (SP) granting access for the user and charging the user for these services.

Other information that may be distributed is information about services provided by a modem, such as a VoIP gateway (Voice over IP), Internet gateway, fixed network services, infrastructure services, calculational services, database services, and other such informative services. Information about authority level of a user may be distributed using the present invention as well. This may be of interest for instance in a military application or in a rescue application, where it may be important to find a chain of command, a access level of databases available as services in the network, and so on.

Advantages of the present invention include:
- No single point of failure, because all nodes have their own name service database.
- Discovery of available nodes in the network is automatic.
- No central administration of the network is needed; each node may be manually configured locally by the users.
- Data about all available nodes in the network is stored locally and may be retrieved in one single operation (e.g. for use by applications).

The invention may be implemented in software using many different coding approaches and run on a suitable calculational device, such as a microprocessor. It may also be implemented in more hardware close environments, such as in an FPGA (Field Programmable Gate Array), a DSP (Digital Signal Processor), or an ASIC (Application Specific Integrated Circuit). These are non-limiting examples of units or devices in which the present invention may be implemented.

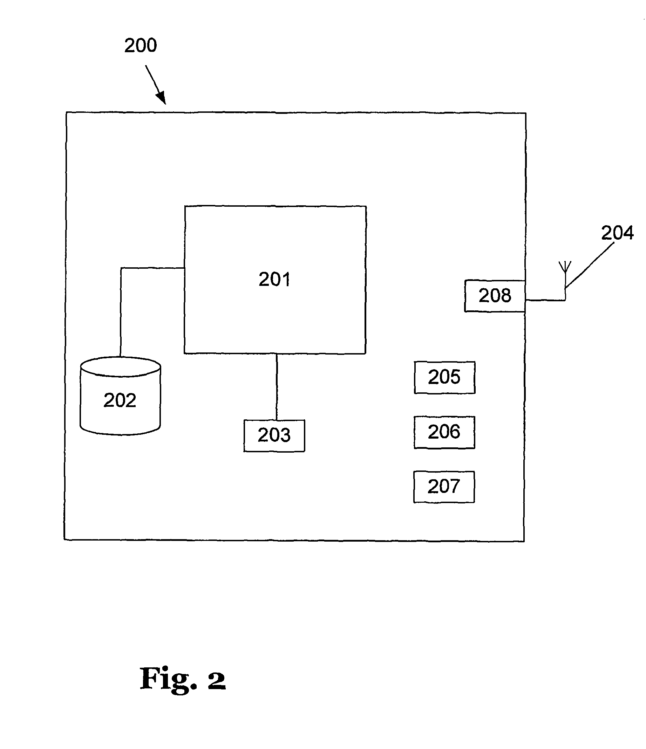

Fig. 2 illustrates a device 200 acting as a node in a multihop wireless ad hoc network. The device 200 may be a communicating device such as laptop, PDA (Personal Digital Assistant), PC (Personal Computer), mobile telephone (e.g. GPRS or 3G), or an application specific device for commercial, industrial, or governmental processes or purposes. The device may comprise a processing unit, such as a microprocessor 201, controlling communication, calculations, and similar operations, a storage unit, such as a memory (volatile or non-volatile), a wireless interface unit 208 connected to an optional antenna 204, a communication interface 203 handling communication specific processes, and other units 205 to 207 for different processes, such as user interface, authorization interface, or display unit.

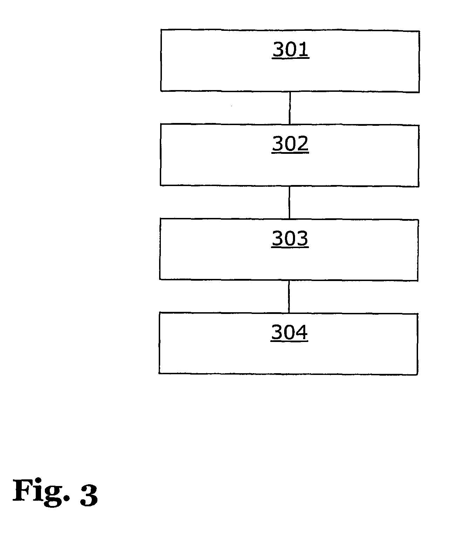

Fig. 3 illustrates a method according to the present invention:
- receiving data indicative of changes of user information (301);
- updating a database with entries associating user information with network information (302);
- detecting changes in the database (303); and
- distributing data indicative of changes of user information to nodes within radio range (304).

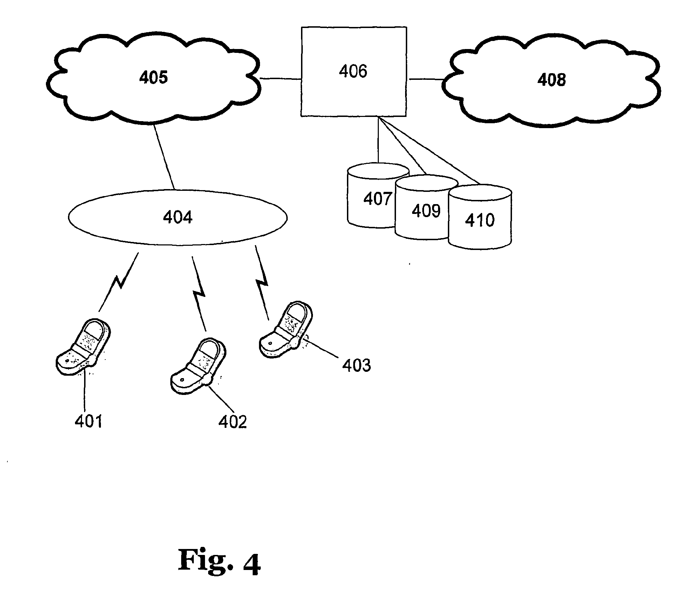

Fig. 4 illustrates a second embodiment of the present invention in which the present invention finds applicability on other networks apart from ad hoc networks, for instance in when a mobile station connects to a infrastructure based network, such as a WLAN (Wireless Local Area Network, e.g. hot spots or similar), a GPRS, or 3G network. For example, nodes 401 to 403 in a GPRS or 3G network are connected with an infrastructure 404 of the GPRS or 3G network. The infrastructure 404 is connected with for instance the Internet 405 and the user nodes establish a connection with a private network 408 through a VPN (Virtual Private Network) link using a VPN server 406. The VPN server stores instances of name service databases 407 each associated with the user connecting to the VPN network.

Users may log into a VPN (Virtual Private Network) protected private network 408 using their GPRS or 3G equipment. They log in to the VPN network via for instance the Internet or some similar public or semi public network (e.g. a network provided by a Service Provider). In order to keep track of the users from the private network and providing communication possibilities between users logged into the private network, a naming service according to the present invention is utilized, When a user logs out, a new user logs in, or any other new information is available the name services in the private network are updated. Each user logged in has a dedicated name service database 407 associated with the user. This dedicated database 407 may be located in a server 406 associated with the private VPN protected network or locally cached (not shown) in each node, such as a PDA. A mobile station may be for instance a mobile phone, a laptop, a PDA, or similar equipment used in mobile applications.

In this second embodiment the system is triggered for an update of information using a similar method as for the first embodiment.

An interpretation interface or "translator" may be provided that can handle interfacing to applications that is not normally designed to communicate in a network using the present invention, i.e. a name resolution function for "legacy" applications.

The name service database may communicate with an SNMP (Simple Network Management Protocol) application in order to collect statistical data, configuration, and so on, as well as being able to control and configure name service databases remotely from a central view point.

A route export function implemented in a gateway may also be provided in order to communicate between the multihop wireless ad hoc network and other networks; such as a fixed network (e.g. Ethernet). This function acts as an interpreter between the name service available in the ad hoc network according to the present invention and standard routing and/or name service protocols available in other networks, such as OSPF (Open Shortest Path First) protocol.

The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A method in a node (1, 2, 3, 4, 5) for associating user information with network information in a multihop wireless ad hoc network (10) comprising a plurality of nodes (1, 2, 3, 4, 5), comprising the steps of:
- receiving, from nodes (1, 2, 3, 4, 5) data indicative of changes of said user information in a database stored in each node (1, 2, 3, 4, 5);
- updating entries in a database stored in the node (1, 2, 3, 4, 5) with entries associating said received changed user information with said network information;
- distributing from the node (1, 2, 3, 4, 5) data indicative of changes of said user information to nodes (1, 2, 3, 4, 5) within radio range.

2. The method according to claim 1, wherein said user information comprise information about at least one of user identifications, network addresses, available services within said network, and authority level of each user.

3. A node (1, 2, 3, 4, 5) in a multihop wireless ad hoc network (10), comprising
- a database for associating user information with network address; and wherein the node is configured to detect changes of said user information in the database, and configured to respond to the changes of said user information in the database; said user information comprising at least one of users, network addresses, available services, and authority levels; wherein said node is further configured to distribute said information, changes to nodes within radio range.

4. The node (1, 2, 3, 4, 5) according to claim 3, wherein said node is further configured to respond to changes of said user information by updating said information changes in said database.

5. A multihop wireless ad hoc network (10) comprising a plurality of nodes (1, 2, 3, 4, 5) together forming said network (10), the plurality of nodes (1, 2, 3, 4, 5) comprising user information, and wherein changes of user information of said nodes (1, 2, 3, 4, 5) are automatically distributed to all nodes (1, 2, 3, A1 5) within said network and wherein said network (10) further comprises a naming service for associating user information with a respective network address.

6. The network (10) according to claim 5, wherein said user information further comprise information about available services in the node,

7. The network (10) according to claim 5, wherein said user information further comprise information about authority level of each user.

8. The network (10) according to claim 5, wherein at least one node (4) within said network is connected to a second network (12) and wherein said at least one node (4) acts as a gateway between said network and said second network; adapting user information in said network to usable information in said second network.

## Patentansprüche

1. Verfahren in einem Knoten (1, 2, 3, 4, 5) zum Assoziieren von Benutzerinformatiouen mit Netzwerkinformationen in einem drahtlosen Mehrsprung-Ad-hoc-Netzwerk (10), umfassend eine Vielzahl von Knoten (1, 2, 3, 4, 5), die folgenden Schritte umfassend:
- Empfangen, von Knoten (1, 2, 3, 4, 5), von Daten, die Änderungen der Benutzemubrmationcn in einer Datenbank, die in jedem Knoten (1, 2, 3, 4, 5) gespeichert ist, anzeigen,
- Aktualisieren von Einträgen in einer Datenbank, die in dem Knoten (1, 2, 3, 4, 5) gespeichert ist, durch Einträge, die die empfangenen geänderten Benutzeriniformationen mit den Netzwerkinnformationen assoziierten;
- Verteilen, von dem Knoten (1, 2, 3, 4, 5), von Daten, die Änderungen der Benutzerinformationen anzeigen, an Knoten (1, 2, 3, 4, 5) in Funkreichweite.

2. Verfahren nach Anspruch 1, wobei die Benutzerinformationen Informationen über mindestens eines von Benutzerkennungen, Netzwerkadressen, verfügbare Dienste in dem Netzwerk und Befugnisniveau jedes Benutzers enthalten.

3. Knoten (1, 2, 3, 4, 5) in einem drahtlosen Mehrsprung-Ad-hoc-Netzwerk (10), umfassend
- eine Datenbank zun Assoziieren von Benutzennformationen mit Netzwerkadressen; und
wobei der Knoten konfiguriert ist, um Änderungen der Benutzerinfonnationen in der Datenbank zu detektieren, und konfiguriert ist, um die Änderungen der Benutzerinformationen in der Datenbank zu berichten; die Benutzerinformnationen umfassend eines von Benutzern, Netzwerkadressen, verfügbare Dienste und Befugnisniveaus; wobei der Knoten weiter konfiguriert ist, um die Informationsänderungen an Knoten in Funkreichweite zu verteilen.

4. Knoten (1, 2, 3, 4, 5) nach Anspruch 3, wobei der Knoten weiter konfiguriert ist, um auf Änderungen der Benutzerinformationen durch Aktualisieren der Informationsändcrungen in der Datenbank zu reagieren.

5. Drahtloses Mehrsprung-Ad-hoc-Netzwerk (10), umfassend eine Vielzahl von Knoten (1, 2, 3, 4, 5), die zusammen das Netzwerk (10) bilden, die Vielzahl von Knoten (1, 2, 3, 4, 5) umfassend Benutzerinformitionen, und wobei Änderungen von Benutzerintformationen der Knoten (1, 2, 3, 4, 5) automatisch an alle Knoten (1,2, 3, A1, 5) in dem Netzwerk verteilt werden und wobei das Netzwerk (10) weiter einen Namensdienst zum Assoziieren von Benutzerinformationen mit einer jeweiligen Netzwerkadfesse umfässt.

6. Netzwerk (10) nach Anspruch 5, wobei die Benutzerinformationen weiter Informationen über verfügbare Dienste in dem Knoten umfassen.

7. Netzwerk (10) nach Anspruch 5, wobei die Benutzinformationen weiter Informationen über das Befugnisniveau jedes Benutzers umfassen.

8. Netzwerk (10) nach Anspruch 5, wobei der mindestens eine Knoten (4) in dem Netz mit einem zweiten Netz (12) verbunden ist und wobei der mindestens eine Knoten (4) als ein Gateway zwischen dem Netzwerk, und dem zweiten Netzwerk fungiert; Benutzerinformationen in dem Netzwerk an benutzbare Informationen in dem zweiten Netzwerk anpasst.

## Revendications

1. Procédé dans un noeud (1, 2, 3, 4, 5) pour associer des informations utilisateur à des informations de réseau dans un réseau ad hoc sans fil à plusieurs bonds (10) comprenant une pluralité de noeuds (1, 2, 3, 4, 5), comprenant les étapes ci-dessous consistant à :
- recevoir, à partir des noeuds (1, 2, 3, 4, 5), des données indiquant des modifications desdites informations utilisateur dans une base de données stockée dans chaque noeud (1, 2, 3, 4, 5) ;
- mettre à jour des entrées dans une base de données stockée dans le noeud (1, 2, 3, 4, 5) avec des entrées associant lesdites informations utilisateur modifiées reçues auxdites informations de réseau ;
- distribuer, à partir du noeud (1, 2, 3, 4, 5), les données indiquant des modifications desdites informations utilisateur, aux noeuds (1, 2, 3, 4, 5) dans la portée radio.

2. Procédé selon la revendication 1, dans lequel lesdites informations utilisateur comprennent des informations sur au moins l'un des éléments parmi : des identifications d'utilisateur, des adresses réseau, des services disponibles au sein dudit réseau, et un niveau d'autorité de chaque utilisateur.

3. Noeud (1, 2, 3, 4, 5) dans un réseau ad hoc sans fil à plusieurs bonds (10), comprenant :
- une base de données pour associer des informations utilisateur à une adresse réseau ; et
dans lequel le noeud est configuré de manière à détecter des modifications desdites informations utilisateur dans la base de données, et configuré de manière à répondre aux modifications desdites informations utilisateur dans la base de données ; lesdites informations utilisateur comprenant au moins l'un parmi les éléments ci-après : des utilisateurs, des adresses réseau, des services disponibles, et des niveaux d'autorité ; dans lequel ledit noeud est en outre configure de manière à distribuer lesdites modifications d'informations à des noeuds dans la portée radio.

4. Noeud (1, 2, 3, 4, 5) selon la revendication 3, dans lequel ledit noeud est en outre configuré de manière à répondre à des modifications desdites informations utilisateur en mettant à jour lesdites modifications d'informations dans ladite base de données.

5. Réseau ad hoc sans fil à plusieurs bonds (10) comprenant une pluralité de noeuds (1, 2, 3, 4, 5) formant ensemble ledit réseau (10), la pluralité de noeuds (1, 2, 3, 4, 5) comprenant des informations utilisateur, et dans lequel des modifications d'informations utilisateur desdits noeuds (1, 2, 3, 4, 5) sont automatiquement distribuées à tous les noeuds (1, 2, 3, 4, 5) dans ledit réseau, et dans lequel ledit réseau (10) comprend en outre un service de nommage pour associer les informations utilisateur à une adresse réseau respective.

6. Réseau (10) selon la revendication 5, dans lequel lesdites informations utilisateur comprennent en outre des informations sur les services disponibles dans le noeud.

7. Réseau (10) selon la revendication 5, dans lequel lesdites informations utilisateur comprennent en outre des informations sur le niveau d'autorité de chaque utilisateur.

8. Réseau (10) selon la revendication 5, dans lequel au moins un noeud (4) dans ledit réseau est connecté à un second réseau (12) et dans lequel ledit au moins un noeud (4) sert de passerelle entre ledit réseau et ledit second réseau ; adaptant les informations utilisateur dans ledit réseau à des informations utilisables dans ledit second réseau.
